# EUROPÄISCHE PATENTSCHRIFT

(11) **EP 2 411 456 B1**
(45) Veröffentlichungstag und Bekanntmachung des Hinweises auf die Patenterteilung: **16.07.2014**
(21) Anmeldenummer: 10710832.6
(22) Anmeldetag: 18.03.2010
(51) Int. Cl.: C08J 5/24, C08J 5/04, C08K 5/00

(54) **VERFAHREN ZUR HERSTELLUNG EINES FASERHALTIGEN VERBUNDWERKSTOFFS**
METHOD FOR PRODUCING A FIBROUS COMPOSITE MATERIAL
PROCÉDÉ DE FABRICATION D'UN MATÉRIAU COMPOSITE CONTENANT DES FIBRES

(30) Priorität: 25.03.2009 DE 102009001855
(43) Veröffentlichungstag der Anmeldung: 01.02.2012
(73) Patentinhaber: Henkel AG & Co. KGaA, 40589 Düsseldorf (DE)
(72) Erfinder: WOLFF FABRIS, Felipe, 95447 Bayreuth (DE); FERENCZ, Andreas, 40223 Düsseldorf (DE); KLOPHAUS, Katja, 50677 Köln (DE); ALTSTÄDT, Volker, 21073 Hamburg (DE)
(86) Internationale Anmeldenummer: PCT/EP2010/053533
(87) Internationale Veröffentlichungsnummer: WO 2010/108846

(56) Entgegenhaltungen:
- WO-A1-2008/130484
- WO-A2-2008/064959
- US-A- 4 977 215

## Beschreibung

Die vorliegende Erfindung betrifft ein Verfahren zur Herstellung eines faserhaltigen Verbundwerkstoffs unter Verwendung mindestens eines Epoxidharzes und mindestens eines Initiators, der einen oder mehrere kationische Metallolefinkomplexe beinhaltet. Die Erfindung betrifft weiterhin ein faserhaltiges Mittel und einen faserhaltigen Verbundwerkstoff als solches.

Faserverstärkte Verbundwerkstoffe bestehen als Mischwerkstoffe in der Regel aus mindestens zwei Komponenten. Neben einer Harzkomponente, wie etwa einem Epoxid-, Cyanat- oder Phenolharz, umfassen die faserverstärkten Verbundwerkstoffe eine Faserkomponente, die beispielsweise aus unidirektionalen als auch aus Web- oder Kurzfasern bestehen kann. Die verwendete Faserkomponente verleiht dem Werkstoff in Kombination mit der eingesetzten Harzkomponente eine hohe Festigkeit, weshalb faserverstärkte Verbundwerkstoffe als Kompositmaterialien in Anwendungsbereichen mit hohen Anforderungen an die strukturellen Materialeigenschaften eingesetzt werden, wie etwa im Luftfahrzeug- oder Automobilbau.

Für viele Anwendungen werden Epoxidharze oder Mischungen verschiedener Epoxidharze als Harzkomponente verwendet.

Während faserverstärkte Verbundwerkstoffe auf Epoxidbasis einen verhältnismäßig hohes Modul und eine verhältnismäßig hohe Glasübergangstemperatur aufweisen, sind diese jedoch gewöhnlich spröde. Es existieren im Stand der Technik daher eine Vielzahl von Vorschlägen die mechanischen Eigenschaften der faserverstärkten Verbundwerkstoffe auf Epoxidbasis, insbesondere in den interlaminaren Regionen der Werkstoffe zu verbessern. Um die Zähigkeit zu verbessern, erfolgt beispielsweise die Zugabe von Kautschuken, Thermoplasten oder bestimmten Füllstoffen, etc., oftmals in Kombination.

US-A-4783506 und US-A-4863787 offenbaren eine härtbare Zusammensetzung, welche auf einem Polyepoxidharz, einem aromatischen Oligomer, einem Diaminhärter für das Epoxidharz und einem reaktiven (z. B. Carboxylfunktionalität) festen Kautschuk basiert, wobei der letztere als nicht schmelzbare Partikel mit einer mittleren Größe zwischen 10 µm und 75 µm vorhanden ist. Die Umwandlung des Kautschuks in nicht schmelzbare Teilchen wird vorzugsweise erreicht - in situ - durch Entfernen von Lösungsmittel von dem Epoxy/Oligomer/Kautschukgemisch, unter Erwärmen von diesem. Unter Verwendung der Zusammensetzung zur Bildung faserverstärkter Verbundwerkstoffe wird ein großer Teil der Partikel durch die Fasern "filtriert" und verbleibt auf der Prepregoberfläche, um als interlaminare Zähmacher zu wirken.

US-A-4977215 und US-A-4972218 offenbaren ähnliche Harzsysteme, wie US-A-4783506 und US-A-4863787, wobei die nicht schmelzbaren Kautschukteilchen eine Glasübergangstemperatur oberhalb von 15°C aufweisen, eine Größe im Bereich von 1 µm bis 75 µm aufweisen und vernetzte carboxylierte Dienkautschuke oder carboxylierte Acrylkautschuke umfassen. Wiederum verbleiben unter Verwendung der Zusammensetzung zur Bildung faserverstärkter Verbundwerkstoffe ein großer Teil der Partikel, wenn nicht sogar sämtliche Partikel auf der Prepregoberfläche, um als interlaminare Zähmacher zu wirken.

Die Effektivität der interlaminaren Zähmacher beruht im Wesentlichen auf der Beibehaltung ihres partikulären Charakters während des Härtungsprozess. Es können daher nur solche partikelförmigen intralaminaren Zähmacher oder Schlagzähmodifizierungsmittel eingesetzt werden, die eine sehr geringe, Löslichkeit in der Harzkomponente aufweisen und deren Glasübergangstemperatur während des Härtungsprozesses über einen längeren Zeitraum hinweg nicht signifikant überschritten wird.

Im Hinblick auf diese Vorgabe unterliegt die Auswahl der Harzkomponente und der partikulären Zähmacher normalerweise engen Vorgaben, was den möglichen Formulierungsspielraum und damit die Anpassbarkeit der Systeme an unterschiedliche Anforderungsprofile stark einschränkt.

Ziel der vorliegenden Erfindung war daher die Entwicklung eines Verfahrens zur Herstellung faserverstärkter Verbundwerkstoffen auf Epoxidbasis, die zur Verbesserung ihrer mechanischen Eigenschaften über partikelförmige interlaminare Zähmacher verfügen, wobei das Verfahren keinen engen Beschränkungen bezüglich der Auswahl der Epoxidharzkomponente und des intralaminaren Zähmachers unterliegt. Ein solches Verfahren ermöglicht die Herstellung verschiedener faserverstärkter Verbundwerkstoffe, die leicht an unterschiedliche Anwendungsprofile mit unterschiedlichen Anforderungen an die mechanischen Struktureigenschaften angepasst werden können.

Die vorliegende Aufgabe wird durch das erfindungsgemäße Verfahren gelöst. Durch die Verwendung von hochreaktiven Initiatoren, die einen oder mehrere kationische Metallolefinkomplexe beinhalten, ist es möglich, die Härtung der Epoxidharzkomponente in einem relativ kurzen Zeitraum bei relativ niedrigen Temperaturen durchzuführen. Somit behalten die als interlaminare Zähmacher verwendeten thermoplastischen Partikel während des Härtungsprozesses im Wesentlichen ihren partikulären Charakter und führen somit zu einer effektiven Verbesserung der Zähigkeitsbeschaffenheit der hergestellten faserverstärkten Verbundwerkstoffe.

Die vorliegende Erfindung betrifft daher ein Verfahren zur Herstellung eines faserhaltigen Verbundwerkstoffs. Das Verfahren umfasst die folgenden Schritte:
a) Bereitstellung von Fasern,
b) Behandlung der Fasern mit mindestens einem Epoxidharz, wobei das Epoxidharz mindestens einen Initiator umfasst, der einen oder mehrere kationische Metallolefinkomplexe beinhaltet und
c) Aushärtung des in Schritt b) erhaltenen faserhaltigen Mittels, insbesondere durch Bestrahlung mit Röntgenstrahlen, Gammastrahlen, Elektronenstrahlen und/oder UV-Strahlen,
wobei die in Schritt a) bereitgestellten Fasern vor und/oder nach Ausführung des Schritts b) mit thermoplastischen Partikeln behandelt werden und/oder das Epoxidharz thermoplastische Partikel enthält.

Dabei ist es möglich, beispielsweise für die Herstellung von faserverstärkten Verbundwerkstoffe in Form von Laminaten, die Verfahrensschritte a) und b) vor der Ausführung des Verfahrensschritts c) beliebig oft zu wiederholen.

Ein weiterer Gegenstand der Erfindung ist ein faserhaltiges Mittel zur Herstellung eines faserverstärkten Verbundwerkstoffes, enthaltend
a) Fasern, vorzugsweise ausgewählt aus Kohlefasern, Aramidfasern, Glasfasern, Siliciumnitridfasern, Metallfasern, Keramikfasern, Borfasern Polyethylenfasern, Polypropylenfasern, Polyesterfasern und/oder Naturfasern,
b) mindestens ein Epoxidharz,
c) thermoplastische Partikel und
d) mindestens einen Initiator, der einen oder mehrere kationische Metallolefinkomplexe umfasst.

Ebenfalls Gegenstand der vorliegenden Erfindung ist ein faserhaltiger Verbundwerkstoff, der durch das erfindungsgemäße Verfahren oder durch Härtung des erfindungsgemäßen faserhaltigen Mittels herstellbar ist.

Ein faserhaltiger Verbundwerkstoff ist im Sinne der vorliegenden Erfindung ein aus mindestens zwei Hauptkomponenten bestehender Mischwerkstoff, der Fasern als verstärkende Komponente und mindestens ein Epoxidharz als Harzkomponente umfasst.

Als Fasern kommen im Prinzip alle Fasern natürlichen und synthetischen Ursprungs in Betracht, die sich durch ihre hohe Festigkeit und hohe Bruchdehnung auszeichnen. Vorzugsweise werden die Fasern ausgewählt aus Kohlefasern, Aramidfasern, Glasfasern, Siliciumnitridfasern, Metallfasern, Keramikfasern, Borfasern, Polyethylenfasern, Polypropylenfasern, Polyesterfasern und/oder Naturfasern, wobei als Naturfasern Flachs- und Sisalfasern besonders bevorzugt sind.

Kohlefasern sind bevorzugt, da sie eine gute spezifische Festigkeit und ein gutes spezifisches Elastizitätsmodul aufweisen. Im Rahmen der Erfindung können alle Arte von Kohlefasern eingesetzt werden, wobei Kohlefasern mit hoher Festigkeit und hoher Bruchdehnung bevorzugt sind. Besonders bevorzugt sind Kohlefasern, die eine Zugfestigkeit von 4,4 GPa oder mehr und eine Zugdehnung von 1,7% oder mehr aufweisen.

Neben Kohlefasern mit kreisförmigen Querschnitten können auch Fasern mit unrunden Querschnitten, wie beispielsweise Dreiecken, Quadraten, hohlen Formen, mehrblättrigen Formen und H-Formen verwendet werden.

Obwohl die Anordnung der Fasern keiner speziellen Beschränkung unterliegt, kann es für bestimmte Anwendungszwecke vorteilhaft sein, dass die Fasern in Form eines Gewebes, einer Matte, eines Gewirkes und/oder eines Geflechts vorliegen. Für Anwendungen, die hohe Festigkeit und einen hohen Elastizitätsmodul erfordern, sind Fasern, die parallel in eine Richtung angeordnet sind, am besten geeignet.

Unter einem "Epoxidharz" wird im Rahmen der vorliegenden Erfindung eine HarzZusammensetzung verstanden, die auf der Basis von Epoxidverbindungen oder epoxidhaltigen Verbindungen gebildet wird, wobei die vorgenannten Verbindungen vorzugsweise mindestens zwei Epoxygruppen (Oxiranringe) aufweisen.

In einer bevorzugten Ausführungsform der Erfindung können die Epoxidverbindungen oder epoxidhaltigen Verbindungen des Epoxidharzsystems der polymerisierbaren Zubereitung sowohl oligomere als auch monomere Epoxidverbindungen sowie Epoxide vom polymeren Typ umfassen und können aliphatische, cycloaliphatische, aromatische oder heterocyclische Verbindungen darstellen.

Geeignete Epoxidharze im Rahmen der vorliegenden Erfindung sind beispielsweise vorzugsweise ausgewählt aus Epoxidharzen vom Bisphenol-A-Typ, Epoxidharzen vom Bisphenol-S-Typ, Epoxidharzen vom Bisphenol-F-Typ, Epoxidharzen vom Phenol-Novolak-Typ, Epoxidharzen vom Cresol-Novolak-Typ, epoxidierten Produkten zahlreicher Dicyclopentadien-modifizierter Phenolharze, erhältlich durch Umsetzung von Dicyclopentadien mit zahlreichen Phenolen, epoxidierte Produkte von 2,2',6,6'-Tetramethylbiphenol, aromatische Epoxidharze wie Epoxidharze mit Naphthalin-Grundgerüst und Epoxidharze mit Fluoren-Grundgerüst, aliphatische Epoxidharze wie Neopentylglykoldiglycidylether und 1,6-Hexandioldiglycidylether, alicyclische Epoxidharze wie 3,4-Epoxycyclohexylmethyl-3,4-epoxycyclohexancarboxylat und Bis(3,4-epoxycyclohexyl)adipat, und Epoxidharze mit einem Heteroring wie Triglycidylisocyanurat ein.

Insbesondere umfassen die Epoxidharze zum Beispiel das Reaktionsprodukt aus Bisphenol A und Epichlorhydrin, das Reaktionsprodukt aus Phenol und Formaldehyd (Novolak-Harze) und Epichlorhydrin, Glycidyl Ester sowie das Reaktionsprodukt aus Epichlorhydrin und p-Aminophenol.

Weitere Polyphenole, die durch Umsetzung mit Epichlorhydrin (oder Epibromhydrin) geeignete Epoxidharz-Prepolymere liefern, sind: Resorcin, 1,2-Dihydroxybenzol, Hydrochinon, bis(4-hdroxyphenyl)-1,1-isobutan, 4,4'-dihydroxybenzophenon, bis(4-hydroxyphenyl)-1,1-ethan und 1,5-hydroxynaphthalin.

Weitere bevorzugte Epoxidharze, die kommerziell erhältlich sind, umfassen insbesondere Octadecylenoxid, Epichlorhydrin, Styroloxid, Vinylcyclohexenoxid, Glycidol, Glycidylmethacrylat, Diglycidylether von Bisphenol A (z.B. diejenigen, welche unter den Handelsbezeichnungen "Epon 828", "Epon 825", "Epon 1004" und "Epon 1010" der Hexion Specialty Chemicals Inc., "DER-331", "DER-332", "DER-334", "DER-732" und "DER736" der Dow Chemical Co. erhältlich sind), Vinylcyclohexendioxid, 3,4-Epoxycyclohexylmethyl-3,4-epoxycyclohexen-carboxylat, 3,4-Epoxy-6-methylcyclohexylmethyl-3,4-epoxy-6-methyl-cyclohexencarboxylat, Bis(3,4-epoxy-6-methylcyclohexylmethyl)adipat, Bis(2,3-epoxy-cyclopentyl)ether, aliphatisches, mit Polypropylenglycol modifiziertes Epoxid, Dipentendioxid, epoxidiertes Polybutadien (z.B. Krasol Produkte von Sartomer), Epoxidfunktionalitaet enthaltendes Siliconharz, flammhemmende Epoxidharze (z.B. "DER-580", ein bromiertes Epoxidharz vom Bisphenol-Typ, welches von Dow Chemical Co. erhaeltlich ist), 1,4-Butandiol-diglycidylether eines Phenolformaldehyd-Novolaks (z.B. "DEN-431" und "DEN-438" der Dow Chemical Co.), sowie Resorcin-diglycidylether (z.B. "Kopoxite" der Koppers Company Inc.), Bis(3,4-epoxycyclohexyl)adipat, 2-(3,4-Epoxycyclohexyl-5,5-spiro-3,4-epoxy)cyclohexan-meta-dioxan, Vinylcyclohexenmonoxid, 1,2-Epoxyhexadecan, Alkylglycidilether wie z.B. C8-C10-Alkyl-glycidylether (z.B. "HELOXY Modifier 7" der Hexion Specialty Chemicals Inc.), C12-C14-Alkyl-glycidylether (z.B. "HELOXY Modifier 8" der Hexion Specialty Chemicals Inc.), Butylglycidylether (z.B. "HELOXY Modifier 61" der Hexion Specialty Chemicals Inc.), Cresylglycidylether (z.B. "HELOXY Modifier 62" der Hexion Specialty Chemicals Inc.), p-tert.-Butylphenyl-glycidylether (z.B. "HELOXY Modifier 65" der Hexion Specialty Chemicals Inc.), polyfunktionelle Glycidylether wie z.B. Diglycidylether von 1,4-Butandiol (z.B. "HELOXY Modifier 67" der Hexion Specialty Chemicals Inc.), Diglycidylether von Neopentylglycol (z.B. "HELOXY Modifier 68" der Hexion Specialty Chemicals Inc.), Diglycidylether von Cyclohexandimethanol (z.B. "HELOXY Modifier 107" der Hexion Specialty Chemicals Inc.), Trimethylolethan-triglycidilether (z.B. "HELOXY Modifier 44" der Hexion Specialty Chemicals Inc.), Trimethylolpropan-triglycidylether (z.B. "HELOXY Modifier 48" der Hexion Specialty Chemicals Inc.), Polyglycidylether eines aliphatischen Polyols (z.B. "HELOXY Modifier 84" der Hexion Specialty Chemicals Inc.), Polyglycoldiepoxid (z.B. "HELOXY Modifier 32" der Hexion Specialty Chemicals Inc.), Bisphenol F-Epoxide (z.B. "EPN-1138" oder GY-281" der Huntsman Int. LLC), 9,9-Bis-4-(2,3-epoxypropoxy)-phenylfluorenon (z.B. "Epon 1079" der Hexion Specialty Chemicals Inc.).

Weitere bevorzugte kommerziell erhältliche Verbindungen sind z. B. ausgewählt aus Araldite^{™} 6010, Araldit^{™} GY-281^{™}, Araldit^{™} ECN-1273, Araldit^{™} ECN-1280, Araldit^{™} MY-720, RD-2 existiert von der Huntsman Int. LLC; DEN^{™} 432, DEN^{™} 438, DEN^{™} 485 von Dow Chemical Co., Epon^{™} 812, 826, 830, 834, 836, 871, 872,1001, 1031 etc. von Hexion Specialty Chemicals Inc. und HPT^{™} 1071, HPT^{™} 1079 ebenfalls von Hexion Specialty Chemicals Inc., als Novolak-Harze weiterhin beispielsweise Epi-Rez^{™} 5132 von Hexion Specialty Chemicals Inc., ESCN-001 von Sumitomo Chemical, Quatrex 5010 von Dow Chemical Co., RE 305S von Nippon Kayaku, Epiclon^{™} N673 von DaiNipon nk Chemistry oder Epicote^{™} 152 von Hexion Specialty Chemicals Inc.

In einer speziellen Ausführungsform der vorliegenden Erfindung können auch Mischungen mehrerer der genannten Epoxidharze verwendet werden.

Die im Rahmen des erfindungsgemäßen Verfahrens verwendeten thermoplastischen Partikel ermöglichen vorzugsweise eine gezielte Schlagzähmodifizierung der interlaminaren Regionen des hergestellten faserhaltigen Verbundwerkstoffs, wobei auch beliebige Mischungen unterschiedlicher thermoplastischer Partikel verwendet werden können.

Unter einem thermoplastischen Partikel wird im Sinne der vorliegenden Erfindung ein bei 20°C und 1013 mbar festes teilchenförmiges Gebilde verstanden, das im Wesentlichen oder vollständig aus einem oder einer Mischung verschiedener thermoplastischer Polymere besteht.

Unter einem thermoplastischen Polymer ist ein Stoff zu verstehen, dessen äußere Form oberhalb einer bestimmten Temperatur verformt werden kann, ohne dass bei dieser Temperatur eine stoffliche Zersetzung des Polymers eintritt.

In einer Ausführungsform der Erfindung weisen die thermoplastischen Partikel eine mittels DMA (dynamisch-mechanischer Analyse) bestimmte Glasübergangtemperatur von mindestens 45°C auf. Thermoplastische Partikel mit einer Glasübergangstemperatur von mindestens 45°C bieten gegenüber Partikeln mit einer geringeren Glasübergangstemperatur den Vorteil, dass sie trotz der thermischen Beanspruchung während des Härtungsprozesses besser in der Lage sind ihren partikulären Charakter beizubehalten und somit eine effektivere Zähmodifizierung, insbesondere eine bessere interlaminare Zähmodifizierung, zu bewirken.

Insbesondere werden im Rahmen der vorliegenden Erfindung thermoplastische Partikel verwendet, die eine Glasübergangstemperatur von 55°C bis 280°C, vorzugsweise von 65°C bis 250°C, besonders bevorzugt von 75°C bis 220°C und insbesondere eine Glasübergangstemperatur von 95°C bis 200°C aufweisen.

Für bestimmte Anwendungszwecke kann es allerdings auch sinnvoll sein, dass die Glasübergangstemperatur der verwendeten thermoplastischen Partikel zwischen 25°C und 45°C liegt.

Die Glasübergangstemperatur wird im Rahmen der vorliegenden Erfindung mittels dynamisch-mechanischer Analyse (DMA) untersucht. Mit der DMA werden der Speichermodul G', der Verlustmodul G" und der Verlustfaktor tan δ in Abhängigkeit von der Temperatur ermittelt. Aus diesen Größen kann die Erweichungstemperatur der Polymere bestimmen werden. Die Glasübergangstemperatur wird aus dem Tg-Peak ermittelt, bei der tan ö (Verlustfaktor) das Maximum erreicht.

Die Untergrenze der Größe der thermoplastischen Partikel ist einerseits durch deren Herstellbarkeit und andererseits durch ihren Einfluss auf die Materialeigenschaften des faserverstärkten Verbundwerkstoffs gegeben. Die thermoplastischen Partikeln dürfen einerseits nicht zu groß sein, um ihre Applizierbarkeit und homogene Verteilbarkeit zu gewährleisten, jedoch auch nicht zu klein, damit bei der erforderlichen Anwendungsmenge nicht zu viele Einzelpartikel vorliegen, die die Ausbildung eines stabilen Verbundwerkstoffs behindern können.

Eine technisch zweckmäßige Untergrenze der mittleren Teilchengröße der thermoplastischen Partikel liegt bei 1 µm, vorzugsweise bei 10 µm und insbesondere bei 20 µm. Die Obergrenze der Partikelgröße liegt bei 500 µm, vorzugsweise bei 100 µm und insbesondere bei 50 µm.

Die mittlere Teilchengröße (D 50 Volumenmittel) der thermoplastischen Partikel kann nach üblichen Verfahren bestimmt werden, beispielsweise durch Lichtstreuung. Dabei sind unter "Partikel" diejenigen Teilchen zu verstehen, die im Epoxidharz dispergiert oder auf der Faseroberfläche verteilt vorliegen. Diese können Agglomerate kleinerer Einheiten darstellen. Das D 50 Volumenmittel ist derjenige Punkt in der Teilchengrößenverteilung, bei dem 50 Vol.-% der Teilchen einen kleineren und 50 Vol.-% der Teilchen einen größeren Durchmesser aufweisen.

Insbesondere ist es bevorzugt, dass mindestens 90%, insbesondere mindestens 95% der thermoplastischen Partikel, bezogen auf die Gesamtanzahl der thermoplastischen Partikel, eine maximale Ausdehnung in jede Raumrichtung von weniger als 100 µm, vorzugsweise von weniger als 70 µm und insbesondere von weniger als 50 µm aufweisen.

Es ist weiterhin bevorzugt, dass mindestens 90% der thermoplastischen Partikel, bezogen auf die Gesamtanzahl der thermoplastischen Partikel, eine minimale Ausdehnung in jede Raumrichtung von mehr als 10 µm, vorzugsweise von mehr als 20 µm und insbesondere von mehr als 30 µm aufweisen.

Die maximale und minimale Ausdehnung der thermoplastischen Partikel in jede Raumrichtung kann dabei durch statistische Auswertung (elektronen-)mikroskopischer Aufnahmen erhalten werden.

Die thermoplastischen Partikel der vorliegenden Erfindung können aus einem oder einer Mischung mehrerer geeigneter Materialien bestehen oder diese umfassen. Geeignete Materialien sind beispielsweise Festkautschuke, wie etwa Polybutadien, Styrol-Butadien-Kautschuk, Butadien-Acryl-nitril-Kautschuk, EPDM, synthetischer oder natürlicher Isoprenkautschuk, Butylkautschuk oder Polyurethankautschuk. Besonders geeignet sind teilvernetzte Festkautschuke auf der Basis von Isopren-Acrylnitril- oder Butadien-Acrylnitril-Copolymeren

Die thermoplastischen Partikel können auch Block-Copolymere umfassen oder aus diesen bestehen, beispielsweise solche, bei denen zumindest ein Polymerblock eine Glastemperatur unterhalb von 20°C (vorzugsweise unterhalb 0°C oder unterhalb -30°C oder unterhalb -50°C) aufweist, beispielsweise ein Polybutadienblock oder ein Polyisoprenblock. Zumindest ein weiterer Block des Block-Copolymers hat eine Glastemperatur oberhalb von 20°C (vorzugsweise oberhalb 50°C oder oberhalb 70°C), beispielsweise ein Polystyrolblock oder ein Polymethylmethacrylatblock. Als konkrete Beispiele seien genannt: Styrol-Butadien-Methylmethacrylat-Block-Copolymere, Methylmethacrylat-Butadien-Methylmethacrylat-Block-Copolymere und Butadien-Methylmethacrylat-Block-Copolymere.

Weiterhin sind Block-Copolymere bevorzugt, die sowohl einen aromatischen Polymerblock als auch einen aliphatischen Polymerblock enthalten. Der aromatische Polymerblock kann beispielsweise ein Polystyrolblock sein. Der aliphatische Polymerblock kann beispielsweise ein Polybutadienblock oder ein Polyisoprenblock sein. Besonders bevorzugt sind Block-Copolymere mit einem Aufbau: aromatischer Polymerblock - aliphatischer Polymerblock - aromatischer Polymerblock. Insbesondere kommen hierfür Styrol-Isopren-Styrolblock-Copolymere (SIS-Copolymere) in Betracht. Aus diesen sind wiederum solche SIS-Copolymere bevorzugt, die einen Styrolgehalt im Bereich von etwas 18 bis etwa 25 Gew.-% aufweisen. Derartige SIS-Blockcopolymere sind beispielsweise unter der Handelsbezeichnung Hybrar^{™} von Kururay Europe GmbH erhältlich. Dabei kann der Isoprenblock ganz oder teilweise hydriert sein, wodurch die Anzahl der ursprünglich vorhandenen Kohlenstoff-Kohlenstoff-Doppelbindungen verringert und hierdurch die thermische Stabilität des Block-Copolymers erhöht wird.

In einer speziellen Ausführungsform der Erfindung bestehen die thermoplastischen Partikel aus Polysulfonen, Polyethersulfonen, Polyetherketonen, Polybutylenterephthalaten, Polycarbonaten, Polyetherimiden, Polyalkylenen, Polyamiden, Polyestern, Polyamidimiden, Polyarylethern und/oder Polyarylaten, wobei Polysulfone und/oder Polyethersulfone besonders bevorzugt sind.

Die thermoplastischen Partikel können beispielsweise mittels einer Rotor-Schnellmühle hergestellt werden, wobei es bei schwer mahlbaren thermoplastischen Partikel zweckmäßig ist die Partikel vor dem Mahlvorgang zu verspröden (z.B. durch Zugabe von flüssigen Stickstoff vor der Mahlung). Geeignete thermoplastische Partikel sind beispielsweise als kommerzielle Produkte unter den Handelsnamen VIRANTAGE^{™} Polyethersulfon, VIRANTAGE^{™} Polyphenylsulfon, VIRANTAGE^{™} Polyamide-imide, VIRANTAGE^{™} Polyetheretherketone, VIRANTAGE^{™} Polyphenylenesulfide, VIRANTAGE^{™} von Solvay Advanced Polymers, LLC, Ultrason^{®} E Polyethersulfon, Ultrasono^{®} S Polysulfon, Ultrason^{®} P Polyphenylensulfon von BASF SE erhältlich.

Gemäß des erfindungsgemäßen Verfahrens werden die im ersten Verfahrensschritt (Schritt a) bereitgestellten Fasern vor und/oder nach der Ausführung des zweiten Verfahrensschritts (Schritt b), also der Behandlung der Fasern mit mindestens einem Epoxidharz, das mindestens einen Initiator umfasst, der einen oder mehrere kationische Metallolefinkomplexe beinhaltet, mit thermoplastischen Partikeln behandelt. Das vorgenannte Epoxidharz kann dabei selbst thermoplastische Partikel enthalten.

Unter dem Begriff "behandeln" wird im Sinne der vorliegenden Erfindung ein Vorgang verstanden, bei dem mindestens zwei Stoffe miteinander in Kontakt gebracht werden. Beispielsweise ist unter der Behandlung der Fasern mit dem mindestens einen Epoxidharz zu verstehen, dass die Fasern mit dem Epoxidharz getränkt werden oder dass ein Film des Epoxidharzes auf die Faseroberfläche und/oder auf die Gewebeoberfläche aufgebracht wird.

Für den Fall, dass die bereitgestellten Fasern vor und/oder nach der Ausführung des zweiten Verfahrensschritts mit den thermoplastischen Partikel behandelt werden, können die thermoplastischen Partikel auf einer Oberfläche, etwa auf der Oberfläche eines Prepregs oder eines Fasergewebes, möglichst homogen verteilt werden.

In einer Ausführungsform des erfindungsgemäßen Verfahrens werden die thermoplastischen Partikel nach der Behandlung der Fasern mit dem mindestens einen Epoxidharz, das mindestens einen Initiator umfasst, der einen oder mehrere kationische Metallolefinkomplexe beinhaltet, auf den so behandelten Fasern möglichst homogen verteilt. Die Fasern liegen dabei insbesondere in Form eines Gewebes, einer Matte, eines Gewirkes und/oder eines Geflechts vor.

In einer weiteren Ausführungsform des erfindungsgemäßen Verfahrens werden die thermoplastischen Partikel vor der Behandlung der Fasern mit dem mindestens einen Epoxidharz, das mindestens einen Initiator umfasst, der einen oder mehrere kationische Metallolefinkomplexe beinhaltet, auf den Fasern möglichst homogen verteilt. Die Fasern liegen dabei insbesondere in Form eines Gewebes, einer Matte, eines Gewirkes und/oder eines Geflechts vor.

Alternativ dazu können die thermoplastischen Partikel der vorliegenden Erfindung vor und nach der Behandlung der Fasern mit dem mindestens einen Epoxidharz, das mindestens einen Initiator umfasst, der einen oder mehrere kationische Metallolefinkomplexe beinhaltet, auf der Gewebeoberfläche bzw. auf der Harz-behandelten Gewebeoberfläche möglichst homogen verteilt werden.

Die beschriebenen Vorgehensweisen bieten den Vorteil, dass die thermoplastischen Partikel der vorliegenden Erfindung nicht im Epoxidharz dispergiert vorliegen. Auf diese Weise werden Agglomerationstendenzen der thermoplastischen Partikel und deren unerwünschte lokale Anreicherung auf bestimmten Fasern und/oder Faserschichten durch faserbedingte Filtereffekte minimiert.

In einer speziellen Ausführungsform der Erfindung liegt die Auftragsmenge der thermoplastischen Partikel auf der Oberfläche eines aus den Fasern der vorliegenden Erfindung gebildeten Gewebes und/oder Prepregs zwischen 5 und 50 g/m², vorzugsweise zwischen 10 und 40 g/m², besonders bevorzugt zwischen 12 und 30 g/m² und überaus bevorzugt zwischen 15 und 25 g/m².

Wie bereits oben ausgeführt beinhaltet der in der vorliegenden Erfindung verwendete mindestens eine Initiator einen oder mehrere kationische Metallolefinkomplexe.

Unter einem kationischen Metallolefinkomplex wird im Sinne der vorliegenden Erfindung ein Komplex verstanden, der ein oder mehrere Metallkation(en) als Zentralatom(e) und mindestens ein Olefin als koordinierenden Liganden umfasst. Insbesondere sind solche kationischen Metallolefinkomplexe bevorzugt, die ausschließlich Olefinliganden als koordinierende Liganden aufweisen.

In einer bevorzugten Ausführungsform der Erfindung wird mindestens ein Metall im kationischen Metallolefinkomplex aus Silber, Cobalt, Kupfer, Aluminium oder Titan ausgewählt, wobei Silber und Kupfer besonders bevorzugt sind. Vorzugsweise werden alle Metalle im kationischen Metallolefinkomplex aus Silber, Cobalt, Kupfer, Aluminium oder Titan ausgewählt. Der Metallolefinkomplex kann auch mehrere der oben genannten Metalle als Zentralatome enthalten.

In einer weiteren Ausführungsform der vorliegenden Erfindung wird mindestens ein Olefin im kationischen Metallolefinkomplex ausgewählt wird aus Propen, 1-Buten, 1-Penten, 1-Hexen, 1-Octen, 1-Decen, Isopren, Norbornen, Cyclohexen, Cycloocten, Cyclodecen, 1,4-Cyclohexadien, 4-Vinylcyclohexen, trans-2-Octen, Styrol, 5-Norbornen-2-carbonsäure, Butadien, 1,5-Hexadien, 1,6-Heptadien, 1,7-Octadien, 1,9-Decadien, Sorbinsäureethylester, 1,3-Cyclohexadien, 1,3-Cyclooctadien, 1,5-Cyclooctadien, Norbornadien, Dicyclopentadien, Cycloheptatrien, trans,trans,trans-1,5,9-Cyclododecatrien, trans,trans,cis-1,5,9-Cyclododecatrien, Cyclooctatetraen, Squalen, Diallylcarbonat, Diallylether, Diallyldimethylsilan, Cyclopentadien, Ethylvinylether, Limonen, 1,2-Dihydronaphthalin, Zimtsäureethylester, Ethylacrylat, Ethylmethacrylat, Stilben, Ölsäuremethylester oder Linolensäuremethylester.

Vorzugsweise werden alle Olefine im kationischen Metallolefinkomplex aus den oben genannten Olefinen ausgewählt. Der Metallolefinkomplex kann auch mehrere der oben genannten Olefine als Olefinliganden enthalten.

In diesem Zusammenhang ist zu beachten, dass der Initiator selbst eine neutrale Gesamtladung aufweist, indem die resultierende positive Ladung aller kationischen Metallotefinkomplexe durch eine entsprechende Anzahl von Anionen mit der jeweils entsprechenden Ladung ausgeglichen wird. Als Anionen sind insbesondere schwach-koordinierende Anionen bevorzugt.

Zur Definition des Begriffs schwach-koordinierende Anionen wird auf Hollemann-Wiberg, Lehrbuch der Anorganischen Chemie 101. Auflage, Walter de Gruyter Berlin New York 1995, S. 1654 - 1655 verwiesen.

Der Initiator beinhaltet daher neben einem oder mehreren kationischen Metallolefinkomplexen auch ein oder mehrere Anionen, die vorzugsweise ausgewählt werden aus Hexafluoroantimonat (SbF₆⁻), Hexafluorophosphat (PF₆⁻), Bortetrafluorid (BF₄⁻), Hexafluoroaluminat (AIF₆³⁻), Trifluormethansulfonat (CF₃SO₃⁻), Nitrat (NO₃⁻), Hexafluoroarsenat (AsF₆⁻), Tetrakis(pentafluorphenylborat) (B[C₆F₅]₄⁻), Tetrakis[3.5-bis(trifluormethyl)phenyl]borat (B[C₆H₃(CF₃)₂]₄⁻), Tetraphenylborat (B[C₆H₅]₄⁻), Hexafluorotitanat (TiF₆²⁻), Hexafluorogermanat (GeF₆²⁻), Hexafluorosilicat (SiF₆²⁻), Hexafluoronickelat (NiF₆²⁻) und/oder Hexafluorozirkonat (ZrF₆²⁻) Ein besonders bevorzugtes Anion im Sinne der vorliegenden Erfindung ist Hexafluoroantimonat (SbF₆⁻).

Bevorzugte Initiatoren der vorliegenden Erfindung werden durch die allgemeine Formel (I) beschrieben,

{[M(L)ₐ]X_{b}}ₙ Formel (I),

mit M = Metallkation, L = Olefinligand, X = Anion, vorzusweise ausgewählt aus der Gruppe der schwach-koordinierenden Anionen,
a = 1 bis 10, bevorzugt 1 bis 6, besonders bevorzugt 1 bis 4,
b = 1 bis 10, bevorzugt 1 bis 6, besonders bevorzugt 1 bis 3,
n = von1 bis 20000000,
wobei a, b, und n sowohl ganze Zahlen als auch Zahlenbereiche darstellen können und a zusätzlich auch nicht ganze Zahlen darstellen kann.

Insbesondere ist a eine Zahl von 1 bis 6, besonders bevorzugt von 1 bis 4. Weiterhin bevorzugt ist a = 1, 1.5, 2, 3 oder 4, ganz besonders bevorzugt 1, 1.5 oder 2.

Insbesondere ist b eine Zahl von 1 bis 6, besonders bevorzugt von 1 bis 3. Weiterhin bevorzugt ist b = 1, 2, 3 oder 4, ganz besonders bevorzugt 1, 2 oder 3.

n ist bevorzugt entweder 1 (monomerer Metallkomplex) oder liegt bevorzugt in einem Bereich von 2 bis 20000000 (monomere, dimere, trimere, oligomere und polymere Koordinationsverbindungen oder Gemische aus diesen), beispielsweise bevorzugt 1 bis 20000, besonders bevorzugt 1 bis 1000, ganz besonders bevorzugt 1 bis 500 oder 1 bis 300.

Das Metallkation M wird vorzugsweise aus Silber, Cobalt, Kupfer, Aluminium oder Titan ausgewählt, wobei Silber und Kupfer besonders bevorzugt sind, während der Olefinligand L und das Anion X bevorzugt aus einem oder mehreren der oben genannten Olefine bzw. Anionen ausgewählt wird.

Zu beachten ist, dass die Struktur der Initiatoren der vorliegenden Erfindung im Wesentlichen durch die Wahl des Olefinliganden und/oder des Anions beeinflusst wird.

Durch die Verwendung mehrfunktioneller Olefinliganden, wie etwa Diene, Triene oder Oligoalkene kann der Initiator Metallolefinkomplexe umfassen, die eine dimere, trimere oder oligomere Struktur aufweisen oder als Koordinationspolymere vorliegen. Im Fall zyklischer Di, Tri- oder Tetraene (z. B. 1,5-Cyclooctadien, Cycloheptatrien oder Cyclooctatetraen) werden bevorzugt überwiegend einkernige Metallolefinkomplexe erhalten. Die Bildung mehrkerniger ligandenverbrückter Strukturen ist jedoch auch möglich. Werden offenkettige Diene als Olefinliganden eingesetzt, kann die Bildung von Koordinationspolymeren favorisiert sein.

In einer bevorzugten Ausführungsform der Erfindung beinhaltet der Initiator mindestens fünf, vorzugsweise mindestens 10 und überaus bevorzugt mindestens 50 oder mindestens 100 gleiche oder verschiedene Metallkationen, die durch verbückende Olefinliganden mit mindestens zwei C-C-Doppelbindungen ein kationischen Koordinationspolymer ausbilden.

Unter verbrückenden Olefinliganden sind insbesondere Diene, wie etwa Butadien, 1,5-Hexadien, 1,6-Heptadien, 1,7-Octadien und/oder 1,9-Decadien zu verstehen.

Insbesondere beinhaltet der Initiator mindestens fünf, vorzugsweise mindestens 10 und überaus bevorzugt mindestens 50 oder mindestens 100 identische Metallkationen, die durch verbückende Olefinliganden mit zwei terminalen C-C-Doppelbindungen ein kationischen Koordinationspolymer ausbilden, wobei die genannten Olefinliganden 4 bis 12 Kohlenstoffatome umfassen

Ein solches kationisches Koordinationspolymer mit eindimensionaler Kettenstruktur wird beispielsweise erhalten, wenn Silberhexafluoroantimonat mit 1,7-Octadien umgesetzt wird.

Der resultierende Metallolefinkomplex weist folgende allgemeine Formel (II) auf

{[Ag(1,7-Octadien)_{1.5}]SbF₆}₅₋ₚ Formel (II)

wobei p = 20000000 ist.

Wie aus Formel (II) hervorgeht sind die Silbermetallkationen abwechselnd durch ein und zwei Moleküle 1,7-Octadien verbrückt, so dass im vorliegenden Fall beispielsweise ein Metallolefinkomplex der Formel (III) als kationisches Koordinationspolymer gebildet werden kann, 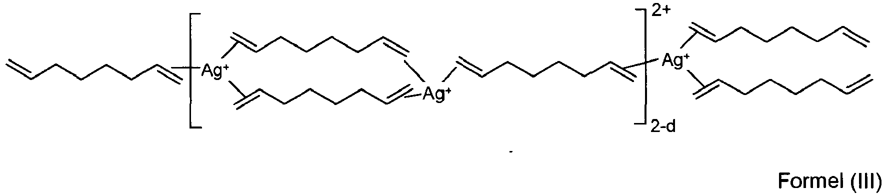 wobei d = 9999999 ist.

Mit den Olefinliganden 1,5-Hexadien und 1,9-Decadien ergeben sich vorzugsweise ähnliche Strukturen. Komplexere Strukturen werden erhalten, in dem Olefinliganden verwendet werden, die mehr als zwei C-C-Doppelbindungen aufweisen.

In einer bevorzugten Ausführungsform der Erfindung wird der Initiator ausgewählt aus [Ag(Cyclohexen)₁₋₄]SbF₆, [Ag(Cycloocten)₁₋₄]SbF₆, [Ag(trans-2-Octen)₁₋₄]SbF₆, [Ag(Styrol)₁₋₄]SbF₆, [Ag(5-Norbornen-2-carbonsäure)₁₋₄]SbF₆, {Ag(1,5-Hexadien)₁₋₄]SbF₆}₁₋ₚ, {[Ag(1,7-Octadien)_{1.5}]SbF₆}₁₋ₚ, {[Ag(1,9-Decadien)₁₋₄]SbF₆}₁₋ₚ, {[Ag(Sorbinsäureethylester)₁₋₄]SbF₆}₁₋ₚ, {[Ag(1,3-Cyclohexadien)₁₋₄]SbF₆}₁₋ₚ, {[Ag(1,3-Cyclooctadien)₁₋₄]SbF₆}₁₋ₚ, Ag(1,5-Cyclooctadien)₂]SbF₆, {[Ag(Norbornadien)₁₋₄]SbF₆}₁₋ₚ, {[Ag(Dicyclopentadien)₁₋₄]SbF₆}₁₋ₚ, {[Ag(Cycloheptatrien)₁₋₄]SbF₆}₁₋ₚ, {[Cu(1,7-Octadien)₁₋₄]SbF₆}₁₋ₚ, [Cu(1,5-Cyclooctadien)₂]SbF₆, [Ag(Allylglycidylether)_{1-4]}SbF₆, {[Ag(trans,trans,cis-1,5,9-Cyclododecatrien)₁₋₄]SbF₆}₁₋ₚ, {[Ag(trans,trans,trans-1,5,9-Cyclododecatrien)₁₋₄]SbF₆}₁₋ₚ, {[Ag(Cyclooctatetraen)₁₋₄]SbF₆}₁₋ₚ, {[Ag(Squalen)₁₋₄]SbF₆}₁₋ₚ, wobei p = 20000000 ist.

Im Sinne der vorliegenden Erfindung können auch beliebige Mischungen der genannten Initiatoren verwendet werden.

Die Herstellung der beschriebenen Initiatoren kann beispielhaft der WO2008/064959 A2 entnommen werden.

In einer Ausführungsform wird der Initiator im Epoxidharz der vorliegenden Erfindung dispergiert und/oder gelöst, wobei die Gesamtmenge des Initiators oder die Gesamtmenge der Mischung verschiedener Initiatoren vorzugsweise 0.01 bis 10 Gew.-%, bevorzugt 0.5 bis 3 Gew.-% und besonders bevorzugt 1 bis 2 Gew.-% der Gesamtmenge des Epoxidharzes oder der Gesamtmenge der Mischung verschiedener Epoxidharze ausmacht.

Für bestimmte Anwendungszwecke kann es im Rahmen der vorliegenden Erfindung sinnvoll sein neben den oben beschriebenen Initiatoren weitere Initiatoren, insbesondere Photoinitiatoren zu verwenden.

Geeignete Photoinitiatoren sind beispielsweise Benzophenon, Acetophenon, Acetonaphthochinon, Methylethylketon, Valerophenon, Hexanophenon, α-Phenylbutyrophenon, p-Morpholinopropiophenon, Dibenzosuberon, 4-Morpholinobenzophenon, 4-Morpholinodeoxybenzoin, p-Diacetylbenzol, 4-Aminobenzophenon, 4'-Methoxyacetophenon, β-Methylanthrachinon, tert-Butylanthrachinon, Anthrachinoncarbonsaeureester, Benzaldehyd, α-Tetralon, 9-Acetylphenanthren, 2-Acetylphenanthren, 10-Thioxanthenon, 3-Acetylphenanthren, 3-Acetylindol, 9-Fluorenon, 1-Indanon, 1,3,4-Triacetylbenzol, Thioxanthen-9-on, Xanthen-9-on, 2,4-Dimethylthioxanthon, 2,4-Diethylthioxanthon, 2,4-Di-iso-propylthioxanthon, 2,4-Dichlorthioxanthon, Benzoin, Benzoin-iso-butylether, Chloroxanthenon, Benzoin-tetrahydropyranylether, Benzoinmethylether, Benzoin-ethylether, Benzoin-butylether, Benzoiniso-propylether, 7-H-Benzoin-methylether, Benz[de]anthracen-7-on, 1-Naphthaldehyd, 4,4'-Bis(dimethylamino)benzophenon, 4-Phenylbenzophenon, 4-Chlorbenzophenon, Michlers Keton, 1-Acetonaphthon, 2-Acetonaphthon, 1-Benzoylcyclohexan-1-ol, 2-Hydroxy-2,2-dimethylacetophenon, 2,2-Dimethoxy-2-phenylacetophenon, 2,2-Diethoxy-2-phenylacetophenon, 1,1-Dichloracetophenon, 1-Hydroxyacetophenon, Acetophenondimethylketal, o-Methoxybenzophenon, Triphenylphosphin, Trio-tolylphosphin, Benz[a]anthracen-7,12-dion, 2,2-Diethoxyacetophenon, Benzilketale, wie Benzildimethylketal, 2-Methyl-1-[4-(methylthio)phenyl]-2-morpholinopropan-1-on, Anthrachinon wie 2-Methylanthrachinon, 2-Ethylanthrachinon, 2-tert-Butylanthrachinon, 1-Chloranthrachinon, 2-Amylanthrachinon und 2,3-Butandion, 2,4,6-Trimethylbenzoyldiphenylphosphinoxid (Lucirin^{®} TPO der BASF AG), Ethyl-2,4,6-trimethylbenzoylphenylphosphinat (Lucirin^{®} TPO L der BASF AG), Bis-(2,4,6-trimethylbenzoyl)-phenylphosphinoxid (Irgacure^{®} 819 der Firma Ciba Spezialiätenchemie), Benzophenone, Hydroxyacetophenone, Phenylglyoxylsäure und ihre Derivate oder Gemische dieser Photoinitiatoren.

Vorzugsweise wird der oben beschriebene Photoinitiator im Epoxidharz der vorliegenden Erfindung dispergiert und/oder gelöst, wobei die Gesamtmenge des Photoinitiators oder die Gesamtmenge der Mischung verschiedener Photoinitiatoren vorzugsweise 0.001 bis 5 Gew.-%, bevorzugt 0.01 bis 3 Gew.-% und besonders bevorzugt 0.11 bis 2 Gew.-% der Gesamtmenge des Epoxidharzes oder der Gesamtmenge der Mischung verschiedener Epoxidharze ausmacht.

Obwohl eine thermische Härtung im Sinne der vorliegenden Erfindung möglich ist, ist es im Rahmen der vorliegenden Erfindung besonders bevorzugt, dass die im erfindungsgemäßen Verfahren durchgeführte Aushärtung und/oder die Härtung des erfindungsgemäßen faserhaltigen Mittels zum faserverstärkten Verbundwerkstoff nicht-thermisch erfolgt.

Ein besonderer Vorteil der nicht-thermischen Härtung liegt darin, dass aufgrund der hohen Reaktivität der verwendeten Initiatoren eine effektive Härtung schon bei relativ niedrigen Temperaturen in relativ kurzen Zeiträumen verwirklicht werden kann. Auf diese Weise kommt es nur zu einer sehr geringen thermischen Beanspruchung des jeweiligen Mittels, wodurch die thermoplastischen Partikel ihren partikulären Charakter während des Härtungsvorganges beibehalten. Wie oben ausgeführt bewirkt der partikuläre Charakter der thermoplastischen Partikel eine besonders effektive intralaminare Zähmodifizierung des faserhaltigen Verbundwerkstoffs der vorliegenden Erfindung.

Die im erfindungsgemäßen Verfahren durchgeführte Aushärtung und/oder die Aushärtung des erfindungsgemäßen faserhaltigen Mittels zum faserverstärkten Verbundwerkstoff kann insbesondere nicht-thermisch erfolgen.

Unter "nicht-thermisch" wird in der vorliegenden Erfindung eine durch Strahlung initiierte Härtung verstanden, wobei eine durch gezielt und aktiv zugeführte thermische Energie herbeigeführte thermische Initiierung nicht umfasst ist. Durch die strahlungsinitiierte Härtung kann thermische Energie frei werden, die zur vollständigen Härtung des jeweiligen Mittels führen bzw. beitragen kann (so genannte Nachhärtung).

Vorzugsweise erfolgt die Härtung durch elektromagnetische Bestrahlung. Insbesondere werden Strahlen einer Wellenlänge von 10 pm bis 1 mm, vorzugsweise von 50 pm bis 780 nm, besonders bevorzugt von 100 pm bis 200 nm verwendet, wie etwa Röntgenstrahlen, Gammastrahlen, Elektronenstrahlen, UV-Strahlen.

Im Sinne der vorliegenden Erfindung kann die Härtung aber auch durch Mikrowellenstrahlen erfolgen.

Insbesondere sind daher solche Initiatoren bevorzugt, die geeignet sind, die nicht-thermische Härtung eines Epoxidharzes zu initiieren und/oder zu beschleunigen. Im Fall einer elektromagnetischen Bestrahlung initiieren und/oder beschleunigen diese Initiatoren die Härtung des jeweiligen Mittels vorzugsweise durch Bildung reaktiver kationischer Spezies und werden aufgrund ihrer Wechselwirkung mit der elektromagnetischen Strahlung vorzugsweise auch als Photoinitiatoren bezeichnet.

Für die im Rahmen der nicht-thermischen Härtung eingesetzte Strahlungsquelle gibt es im Sinne der vorliegenden Erfindung keine speziellen Beschränkungen.

Vorzugsweise kann als Quelle für UV-Strahlen eine Quecksilberlampe, eine Halogenlampe, aber auch monochromatische Strahlung in Form von Lasern verwendet werden.

Erfolgt das Härten unter Verwendung von UV-Strahlen, so findet die UV-Härtung bevorzugt mittels kurzzeitiger ultravioletter Bestrahlung in einem Wellenlängenbereich von 200 bis 450 nm statt, insbesondere unter Verwendung von Quecksilber-Hochdruck- oder -Mitteldruck-Lampen bei einer Leistung von 80 bis 240 W/cm.

Als Beispiele der Quelle von Elektronenstrahlen kann ein System zur Nutzung von Thermoelektronen, erzeugt durch kommerziell erhältlichen Wolframfaden, ein Kaltkathodenverfahren, welches Elektronenstrahlen mittels Durchleiten eines hohen Spannungsimpulses durch ein Metall erzeugt, und ein sekundäres Elektronenverfahren, das sekundäre Elektronen, die durch die Kollision von ionisierten Gasmolekülen erzeugt werden, und eine Metallelektrode nutzt, eingesetzt werden. Als Quelle von α-Strahlen, β-Strahlen und γ-Strahlen können spaltbare Substanzen, wie Co⁶⁰, genutzt werden. Für γ-Strahlen kann eine Vakuumröhre, die die Kollision eines beschleunigten Elektrons mit einer Anode herbeiführt, verwendet werden. Die Strahlung kann entweder einzeln oder in Kombination aus zwei oder mehr Strahlungstypen verwendet werden. Im letzteren Fall können zwei oder mehr Strahlungstypen entweder gleichzeitig oder mit bestimmten Zeitintervallen verwendet werden.

Das Härten unter Verwendung von Strahlung, insbesondere Elektronenstrahlen, wird vorzugsweise bei 20 bis 250°C, bevorzugt bei 80 bis 100°C in einem Zeitraum von 5 Sekunden bis 12 Stunden, bevorzugt 8 Sekunden bis 4 Stunden, ganz besonders bevorzugt 10 Sekunden bis 1 Stunde und/oder mit Strahlen einer Strahlungsenergie von 3 eV bis 25 MeV, insbesondere von 6 eV bis 20 MeV, bevorzugt von 1 keV bis 15 MeV, ganz besonders bevorzugt von 1 keV bis 10 MeV durchgeführt.

In einer bevorzugten Ausführungsform der Erfindung erfolgt die Härtung mit mindestens einer frei wählbaren Bestrahlungseinheit von 1 bis 1000 kGy, vorzugsweise von 1 bis 300 kGy, besonders bevorzugt von 10 bis 200 kGy.

In einer weiteren bevorzugten Ausführungsform der Erfindung kann eine Kombination aus thermischer und / oder nicht-thermischer Härtung vorgenommen werden, wobei die Reihenfolge des thermischen und des nicht-thermischen Härtungsschritts frei wählbar ist und dem entsprechenden Anwendungsprofil bzw. Anwendungszweck angepasst werden kann.

Sollte es vorteilhaft sein die thermische und/oder die nicht-thermische Härtung unter Ausschluss von Sauerstoff durchzuführen, kann die Härtung auch unter einer Schutzgasatmosphäre erfolgen. Als Schutzgas ist prinzipiell jedes Gas geeignet, das sich bezüglich der eingesetzten Chemikalien inert verhält (Inertgas). Dabei kommen vorzugsweise Gase wie N₂, CO₂ oder Argon in Frage. Bevorzugt sind dabei jedoch preisgünstige Gase wie CO₂ und N₂. CO₂ hat den Vorteil, dass es sich am Boden von Gefäßen sammelt und somit leicht zu handhaben ist. Geeignete Schutzgase sind insbesondere nicht giftig und nicht brennbar.

Das erfindungsgemäße Verfahren kann vorzugsweise auf allen allgemein bekannten Verfahren zur Herstellung faserhaltiger Verbundwerkstoffe beruhen. So kann das erfindungsgemäße Verfahren beispielsweise in Form eines Ablegeverfahrens von Hand, eines Prepreg-Verfahrens, eines Infusions-Verfahrens, eines RTM-Verfahrens, eines Strangziehverfahrens, und/oder eines Aufwickelverfahrens durchgeführt werden.

Vorzugsweise wird das erfindungsgemäße Verfahren in Form eines RTM-Verfahrens durchgeführt, wobei das flüssige Epoxidharz, das mindestens einen Initiator enthält, der einen oder mehrere Metallolefinkomplexe umfasst, in ein Substrat aus Fasen gespritzt wird, das sich in einer beliebigen Form befindet. Vorzugsweise werden die genannten Fasern bereits vor dem Einspritzen des Epoxidharzes mit den erfindungsgemäßen thermoplastischen Partikeln behandelt, wodurch eine besonders gute intralaminare Zähmodifizierung erreicht wird. Anschließend erfolgt die Härtung, wodurch der faserverstärkte Verbundwerkstoff hergestellt wird. Aus den oben genannten Gründen ist es dabei besonders vorteilhaft eine nicht-thermische Härtung durchzuführen.

In einer Ausführungsform des Verfahrens werden faserhaltige Verbundwerkstoff erhalten, die eine interlaminare Mode I-Energiefreisetzungsrate Glc von 100 J/m² bis 800 J/m², vorzugsweise von 150 J/m² bis 600 J/m² und insbesondere von 200 bis 590 J/m² aufweisen.

Die interlaminare Mode I-Energiefreisetzungsrate Glc kann gemäß der DIN EN 6033 bestimmt werden: "Double Cantilever Beam" (DCB)-Probekörper werden aus Faserverbund-Laminaten geschnitten. Seitlich von Anfangsriss werden zwei Aluminiumblöcke auf den beiden Oberflächen der DCB-Probe geklebt. Nach genauen Abmessen der Probe werden diese in eine Zugprüfmaschine eingespannt und belastet. Der Rissfortschritt wird über die gesamte Versuchszeit mit einem Mikroskop beobachtet. Beim Versuch wird das Kraft-Weg-Diagramm aufgezeichnet, um die interlaminare Mode I-Energiefreisetzung zu bestimmen.

In einer weiteren Ausführungsform des Verfahrens werden faserhaltige Verbundwerkstoff erhalten, die eine interlaminare Model II-Energiefreisetzung (Gllc) von 200 J/m² bis 2000 J/m², vorzugsweise von 300 J/m² bis 1500 J/m² und insbesondere von 400 bis 1000 J/m² aufweisen.

Die interlaminare Model II-Energiefreisetzung (Gllc) kann gemäß der Norm DIN EN 6034 bestimmt werden: "End Notched Flexure" (ENF)-Proben werden aus Faserverbund-Laminaten hergestellt. Der ENF-Test wird auf einer Dreipunkt-Biege-Vorrichtung durchgeführt. Der Rissfortschritt wird mit einem Mikroskop beobachtet. Beim Versuch wird ein Kraft-Weg-Diagramm aufgezeichnet, um die interlaminare Mode II-Energiefreisetzungsrate zu bestimmen.

In dem erfindungsgemäßen Verfahren sowie in dem erfindungsgemäßen faserhaltigen Mittel können weitere Mittel verwendet werden bzw. enthalten sein, die vorzugsweise ausgewählt werden aus Weichmachern, Füllstoffen, weiteren additiven Harzen, Stabilisatoren, Härterbeschleuniger, Antioxidantien, Haftvermittler, Rheologiemodifizierern, Verdickern, Bindemitteln, Lösungsmittel, Katalysatoren, Reaktivverdünnern, Flammschutzadditiven und/oder weiteren Schlagzähmodifizierungsmitten.

Geeignete Weichmacher sind beispielsweise vorzugsweise Ester wie Abietinsäureester, Adipinsäureester, Azelainsäureester, Benzoesäureester, Buttersäureester, Essigsäureester, Phosphorsäureester, Phthalsäureester; Ester höherer Fettsäuren mit etwa 8 bis etwa 44 C-Atomen, wie Dioctyladipat, Diisodecylsuccinat, Dibutylsebacat oder Butyloleat, Ester OH-Gruppen tragender oder epoxidierter Fettsäuren, Fettsäureester und Fette, Glykolsäureester, Phosphorsäureester, Phthalsäureester, von 1 bis 12 C-Atomen enthaltenden linearen oder verzweigten Alkoholen, wie beispielsweise Dioctylphthalat, Dibutylphthalat oder Butylbenzylphthalat, Propionsäure-ester, Sebacinsäureester, Sulfonsäureester, Thiobuttersäureester, Trimellithsäureester, Zitronensäureester sowie Ester auf Nitrocellulose- und Polyvinylacetat-Basis, sowie Gemische aus zwei oder mehr davon. Besonders geeignet sind die asymmetrischen Ester der difunktionellen, aliphatischen Dicarbonsäuren, beispielsweise das Veresterungsprodukt von Adipinsäuremonooctylester mit 2-Ethylhexanol (Edenol DOA, Fa. Henkel, Düsseldorf).

Ebenfalls als Weichmacher geeignet sind bevorzugt die reinen oder gemischten Ether monofunktioneller, linearer oder verzweigter C4-16-Alkohole oder Gemische aus zwei oder mehr verschiedenen Ethern solcher Alkohole, beispielsweise Dioctylether (erhältlich als Cetiol OE, Fa. Henkel, Düsseldorf).

In einer weiteren bevorzugten Ausführungsform werden als Weichmacher endgruppenverschlossene Polyethylenglykole eingesetzt. Beispielsweise Polyethylen- oder Polypropylenglykoldi-C1-4-alkylether, insbesondere die Dimethyl- oder Diethylether von Diethylenglykol oder Dipropylenglykol, sowie Gemische aus zweien oder mehreren dieser.

Als Füllstoffe geeignet sind beispielsweise anorganische Füllstoffewie wie etwa natürlich vorkommende oder synthetische Materialien wie z.B. Quarz, Nitride (z.B. Siliciumnitrid), z.B. von Ce, Sb, Sn, Zr, Sr, Ba und Al abgeleitete Gläser, kolloidales Siliciumdioxid; Feldspat, Borsilikatgläser, Kaolin, Talk, Titandioxid und Zinkgläser, sowie Siliciumdioxidteilchen von Submikrongröße (z.B. pyrogene Siliciumdioxide wie z.B. die Siliciumdioxide der Serien "Aerosil" "OX 50", "130", "150" und "200", welche von Degussa verkauft werden, sowie "Cab-O-Sil M5", welches von Cabot Corp. verkauft wird), Aluminiumsilikate, Magnesiumsilikate, Zeolithe, Bentonite, gemahlene Mineralstoffe, Calciumcarbonate, Quarzstaub, Kieselsäureanhydrid, Siliciumhydrat oder Ruß, Magnesiumcarbonat, gebrannter Ton, Ton, Eisenoxid, Zinkoxid, Titanium Dioxid, Zellstoff, Holzmehl, Glimmer, Spreu, Graphit, feines Aluminiumpulver oder Feuersteinpulver, Glaskugeln, Glasmehl, Glasfasern und Glasfaserkurzschnitte sowie weitere, dem Fachmann bekannte anorganische Füllstoffe, sowie organische Füllstoffe, insbesondere Faserkurzschnitte oder Kunststoffhohlkugeln, sowie funktionelle Füllstoffe, die die rheologischen Eigenschaften positiv beeinflussen, beispielsweise hochdisperse Kieselsäure, insbesondere mit niedriger BET-Oberfläche von 20-150, bevorzugt 30-100, insbesondere bevorzugt etwa 50 m²/g.

Geeignete additive Harze sind beispiesweise Benzoxazinharze, Phenolharze, Polyethersulfone, Polyurethanharze, Acrylatharze, Cyanacrylatharze, Triazinharze und/oder Polyimidharze.

Zu den im Rahmen der Erfindung als Zusatzstoffe einsetzbaren Stabilisatoren oder Antioxidantien, zählen gehinderte Phenole hohen Molekulargewichts (M_{w}), polyfunktionelle Phenole und schwefel- und phosphorhaltige Phenole. Im Rahmen der Erfindung als Zusatzstoffe einsetzbare Phenole sind beispielsweise 1,3,5-Trimethyl-2,4,6-tris(3,5-di-tert-butyl-4-hydroxybenzyl)benzol; Pentaery-thrittetrakis-3-(3,5-di-tert-butyl-4-hydroxyphenyl)propionat; n-Octa-decyl-3,5-di-tert-butyl-4-hydroxyphenyl)propionat; 4,4-Methylenbis(2,6-di-tert-butyl-phenol); 4,4-Thiobis(6-tert-butyl-o-cresol); 2,6-Di-tert-butylphenol; 2,4-Dimethyl-6-tert-butylphenol, 2,2'-Methylen-bis- (4-methyl-6-tert-butylphenol; 4,4'-Butyliden-bis-(3-methyl-6-tert-butylphenol); 4,4'-Thiobis(3-methyl-6-tert-butylphenol); 2,6-Di-tert-butyl-p-cresol; 6-(4-Hydroxyphenoxy)-2,4-bis(n-octyl-thio)-1,3,5-triazin; Tetrakis[methylen-3-(3,5-di-tert-butyl-4-hydroxyphenyl)propionate]methan; 1,1,3-Tris(2-methyl-4-hydroxy-4-tert-butylphenyl)butan; Di-n-Octadecyl-3,5-di-tert-butyl-4-hydroxybenzylphosphonate; 2-(n-Octylthio)ethyl-3,5-di-tert-butyl-4-hydroxybenzoat; und Sorbithexa[3-(3,5-di-tert-butyl-4-hydroxyphenyl)propionat].

Als Photostabilisatoren sind beispielsweise diejenigen geeignet, die unter dem Namen Thinuvin® (Hersteller: Ciba Geigy) im Handel erhältlich sind.

Geeignete Stabilisatoren, die typische UV-Absorber sind und Lichtstabilisatoren darstellen, können ebenfalls enthalten sein, vorzugsweise ausgewählt aus den Gruppen der Oxanilide, Triazine und Benzotriazole (letztere erhaeltlich als Tinuvin^{®}-Marken der Ciba-Spezialitätenchemie) und Benzophenone oder Kombinationen hiervon. Es kann vorteilhaft sein Lichtstabilisatoren zuzugeben, die UV-Licht nicht absorbieren.

Geeignete UV-Absorber und Lichtstabilisatoren können beispielsweise ausgewählt werden aus 2-Hydroxybenzophenone, zum Beispiel die 4-Hydroxy-, 4-Methoxy-, 4-Octyloxy-, 4-Decyloxy-, 4-Dodecyloxy-, 4-Benzyloxy-, 4,2',4'-Trihydroxy- und 2'-Hydroxy-4,4'-dimethoxy-Derivate sowie Ester von substituierten und unsubstituierten Benzoesäuren, wie zum Beispiel 4-Tertbutyl-phenylsalicylat, Phenylsalicylat, Octylphenylsalicylat, Dibenzoylresorcinol, Bis(4-tert-butylbenzoyl)resorcinol, Benzoylresorcinol, 2,4-Di-tert-butylphenyl-3,5-di-tert-butyl-4-hydroxybenzoat, Hexadecyl-3,5-di-tert-butyl-4-hydroxybenzoat, Octadecyl-3,5-di-tert-butyl-4-hydroxybenzoat, 2-Methyl-4,6-di-tert-butylphenyl-3,5-di-tert-butyl-4-hydroxybenzoat.

### Ausführungsbeispiele

### 1. Herstellung des Initiators

Die Synthese der Initiatoren, umfassend mindestens einen kationischen Metallolefinkomplex, erfolgt in Anlehnung an literaturbekannte Methoden (H.W. Qinn, R.L. Van Gilder, Can. J. Chem. 1970, 48, 2435; A. Albinati, S.V. Meille, G. Carturan, J. Organomet. Chem. 1979, 182, 269; H. Masuda, M. Munakata, S. Kitagawa, J. Organomet. Chem. 1990, 391, 131; A.J. Canty, R. Colton, Inorg. Chim. Acta 1994, 220, 99). Dabei wird AgSbF₆ (Aldrich, 98% oder Chempur, 95+%) in Toluol oder THF gelöst und mit einem Überschuss an Alken, vorzugsweise vier Äquivalenten umgesetzt. Die so erhaltenen hochmolekularen Metallolefinkomplexe des Typs {[Ag(Alken)ₐ]SbF₆}₁₀₀₋ₚ, wobei p einen Wert zwischen 101 und 20000000 einnimmt, sind schwer löslich und fallen aus dem Reaktionsgemisch aus und können dann durch Filtration isoliert werden. Danach werden die Substanzen im Hochvakuum getrocknet.

Im Fall weiterer Metalle und Liganden wurde zunächst das jeweilige Metallchlorid mit AgSbF₆ in einem geeigneten Lösungsmittel wie z.B. Methanol umgesetzt, das ausgefallene AgCI durch Filtration abgetrennt und die resultierende Lösung des Metallhexafluoroantimonats mit dem jeweiligen Liganden umgesetzt. Danach wurde das Lösungsmittel entfernt und die Verbindung wurde im Hochvakuum getrocknet.

### 2. Herstellung der Harzformulierung

Verwendete Substanzen:
- DEN431: Epoxidharz vom Phenolnovolaktyp (Dow Chemicals)
- DEN438: Epoxidharz vom Phenolnovolaktyp (Dow Chemicals)
- PES Radel A-704: Polyethersulfon (Solvay)
- EP2240A: Core-Shell-Material: Siliconkautschukpartikel mit organische Hüllentruktur (Nanoresins).

Die bei Raumtemperatur flüssigen, viskosen oder festen Harze bzw. Harzformulierungen (54,95 Gew.% DEN431 + 23,55 Gew% DEN438 + 15 Gew% PES Radel A-704 + 5 Gew% EP2240A) werden bei Raumtemperatur mit dem entsprechenden Initiator (s. oben, 1,5 Gew% {[Ag(1,7-Octadien)1.5]SbF6}₁₋ₚ} vermengt, auf maximal 80°C erwärmt und so lange gerührt, bis der Initiator vollständig gelöst im Harz vorliegt. Anschließend wird auf Raumtemperatur abgekühlt.

### 3. Herstellung des faserhaltigen Verbundwerkstoffs

Faserhaltige Verbundwerkstoffe werden unter Verwendung von HTA Kohlefasern (Toho Tenax) als Faserkomponente und der o.g. Harzformulierung als Harzkomponente wie folgt hergestellt:
Zuerst wird ein Harzfilm mit einem Oberflächengewicht von 80 g/m² mit einem Schmelzklebstoffauftragungsgerät des Typs ZP 25008 (Fa. Inatec) erzeugt. Anschließend wird ein Prepreg mit einem Faservolumenanteil von ca. 60% erhalten, indem der Harzfilm mit einer Prepreg-Wickelanlage des Typs MDW 100-2 (Fa. Microsam) verarbeitet wird.

Die Herstellung von unidirektionalen Laminaten mit einer Schichtdicke von 3 mm erfolgt durch das Übereinanderlegen von 12 unidirektionalen Prepregs, wobei die einzelnen Prepregs gemäß der oben beschriebenen Vorgehensweise erhalten werden. Bei der Herstellung der Laminate wird auf einem Vakuumtisch nach der Auflage jeder neuen Prepreg-Lage ein Vakuum angelegt, um die Porosität des Materials zu reduzieren. Für den erfindungsgemäßen Fall, dass thermoplastische Partikel als interlaminare Zähmacher verwendet werden, werden auf die Oberfläche jeder einzelnen Prepreg-Lage vor dem Auflegen der nächsten Prepreg-Lage die entsprechenden thermoplastischen Partikel aufgestreut, so dass die in Tabelle 1 angegebene Auftragsmenge erhalten wird. Im vorliegenden Fall werden Polyethersulfon-Partikel des Typs Virantage (Solvay Advanced Polymers, LLC) mit einem mittleren Teilchendurchmesser von ca. 50 µm als thermoplastische Partikel verwendet.

Die Laminate werden anschließend mittels eines Vakuumsacks entlüftet und durch eine Elektronenstrahlanlage (10 MeV) gefahren, wobei die Härtung in vier Schritten, bei denen jeweils eine Dosis von 33 kGy eingebracht wird (insgesamt 132 kGy), erfolgt. Zur besseren Ablösung der gehärteten Laminate, d.h. der faserhaltigen Verbundwerkstoffe, aus der Form, werden diese zuvor mit einer dünnen Schicht Frekote-700NC (Henkel Loctite) als Trennmittel beschichtet.

### 4. Mechanische Daten der faserhaltigen Verbundwerkstoffe

Die interlaminare Mode I-Energiefreisetzung (Glc) wird gemäß der DIN EN 6033 bestimmt. Seitlich von Anfangsriss werden zwei Aluminiumblöcke auf den beiden Oberflächen der "Double Cantilever Beam" (DCB)-Probe geklebt. Nach genauem Abmessen der Probe wird diese in eine Zugprüfmaschine eingespannt und belastet. Der Rissfortschritt wird über die gesamte Versuchszeit mit einem Mikroskop beobachtet. Beim Versuch wird das Kraft-Weg-Diagramm aufgezeichnet, um die interlaminare Mode I-Energiefreisetzung zu bestimmen. Zur Durchführung der bruchmechanischen Versuche wird eine Universalprüfmaschine (UPM) der Fa. Zwick (Typ Z 2.5) eingesetzt. Als Prüfkörper dienen "Double Cantilever Beam" (DCB)-Prüfkörper (250 mmx 25 mm x 3 mm). Alle Messungen werden bei 23°C und 50% Luftfeuchtigkeit durchgeführt.

Die interlaminare Mode II-Energiefreisetzung (Gllc) wird gemäß der DIN EN 6034 bestimmt. Der "End Notched Flexure" (ENF)-Test wird auf einer Dreipunkt-Biege-Vorrichtung durchgeführt und der Rissfortschritt über die gesamte Versuchszeit mit einem Mikroskop beobachtet. Beim Versuch wird ein Kraft-Weg-Diagramm aufgezeichnet, um die interlaminare Mode II-Energiefreisetzungsrate zu bestimmen. Zur Durchführung der bruchmechanischen Versuche wird eine Universalprüfmaschine (UPM) der Fa. Zwick (Typ Z 2.5) eingesetzt. Als Prüfkörper dienen (ENF)-Prüfkörper (120 mm x 25 mm x 3 mm). Alle Messungen werden bei 23°C und 50% Luftfeuchtigkeit durchgeführt.

Die bestimmten bruchmechanischen Daten der faserhaltigen Verbundwerkstoffe sind in Tabelle 1 dargestellt:

**Tabelle 1: Interlaminare Mode I- und Mode II- Energiefreisetzungen**

| Virantage™ Polyethersulfon | Glc | Gllc |
|---|---|---|
| [Auftragsmenge in der intralaminaren Region] | [J/m²] | [J/m²] |
| - (Ref.) | 248 | 565 |
| 10 g/m² | 360 | 950 |
| 20 g/m² | 345 | 1188 |
| 40 g/m² | 380 | 875 |

Es zeigt sich, dass durch Verwendung der Polyethersulfon-Partikel des o.g. Typs eine Zähmodifizierung, insbesondere eine interlaminare Zähmodifizierung, der untersuchten faserhaltigen Verbundwerkstoffe gelingt.

## Patentansprüche

1. Verfahren zur Herstellung eines faserhaltigen Verbundwerkstoffs, umfassend die Schritte:
a) Bereitstellung von Fasern,
b) Behandlung der Fasern mit mindestens einem Epoxidharz, wobei das Epoxidharz mindestens einen Initiator umfasst, der einen oder mehrere kationische Metallolefinkomplexe beinhaltet und
c) Aushärtung des in Schritt b) erhaltenen faserhaltigen Mittels, insbesondere durch Bestrahlung mit Röntgenstrahlen, Gammastrahlen, Elektronenstrahlen, und/oder UV-Strahlen,
wobei die in Schritt a) bereitgestellten Fasern vor und/oder nach Ausführung des Schritts b) mit thermoplastischen Partikeln behandelt werden und/oder das Epoxidharz thermoplastische Partikel enthält.

2. Verfahren nach Anspruch 1, **dadurch gekennzeichnet, dass** die Fasern in Form eines Gewebes, einer Matte, eines Gewirkes und/oder eines Geflechts vorliegen.

3. Verfahren nach einem oder beiden der Ansprüche 1 und 2, **dadurch gekennzeichnet, dass** die Fasern Kohlefasern sind.

4. Verfahren nach mindestens einem der Ansprüche 1 bis 3, **dadurch gekennzeichnet, dass** die thermoplastischen Partikel eine mittels DMA (dynamisch-mechanischer Analyse) bestimmte Glasübergangtemperatur von mindestens 45°C aufweisen.

5. Verfahren nach mindestens einem der Ansprüche 1 bis 4, **dadurch gekennzeichnet, dass** die thermoplastischen Partikel aus Festkautschuken, Block-Copolymeren, Polysulfonen, Polyethersulfonen, Polyetherketonen, Polybutylenterephthalaten, Polycarbonaten, Polyetherimiden, Polyalkylenen, Polyamiden, Polyestern, Polyamidimiden, Polyarylethern und/oder Polyarylaten bestehen.

6. Verfahren nach mindestens einem der Ansprüche 1 bis 5, **dadurch gekennzeichnet, dass** mindestens 90% der thermoplastischen Partikel, bezogen auf die Gesamtanzahl der thermoplastischen Partikel, eine maximale Ausdehnung in jede Raumrichtung von weniger als 100 µm aufweisen.

7. Verfahren nach mindestens einem der Ansprüche 1 bis 6, **dadurch gekennzeichnet**, das mindestens ein Metall im kationischen Metallolefinkomplex ausgewählt wird aus Silber, Kobalt, Kupfer, Aluminium oder Titan.

8. Verfahren nach mindestens einem der Ansprüche 1 bis 7, **dadurch gekennzeichnet, dass** mindestens ein Olefin im kationischen Metallolefinkomplex ausgewählt wird aus Propen, 1-Buten, 1-Penten, 1-Hexen, 1-Octen, 1-Decen, Isopren, Norbornen, Cyclohexen, Cycloocten, Cyclodecen, 1,4-Cyclohexadien, 4-Vinylcyclohexen, trans-2-Octen, Styrol, 5-Norbornen-2-carbonsäure, Butadien, 1,5-Hexadien, 1,6-Heptadien, 1,7-Octadien, 1,9-Decadien, Sorbinsäureethylester, 1,3-Cyclohexadien, 1,3-Cyclooctadien, 1,5-Cyclooctadien, Norbornadien, Dicyclopentadien, Cycloheptatrien, trans,trans,trans-1,5,9-Cyclododecatrien, trans,trans,cis-1,5,9-Cyclododecatrien, Cyclooctatetraen, Squalen, Diallylcarbonat, Diallylether, Diallyldimethylsilan, Cyclopentadien, Ethylvinylether, Limonen, 1,2-Dihydronaphthalin, Zimtsäureethylester, Ethylacrylat, Ethylmethacrylat, Stilben, Ölsäuremethylester oder Linolensäuremethylester.

9. Verfahren nach mindestens einem der Ansprüche 1 bis 8, **dadurch gekennzeichnet, dass** der Initiator neben einem oder mehreren kationischen Metallolefinkomplexen ein oder mehrere Anionen beinhaltet, die ausgewählt werden aus Hexafluoroantimonat (SbF₆⁻), Hexafluorophosphat (PF₆⁻), Bortetrafluorid (BF₄⁻), Hexafluoroaluminat (AIF₆³⁻), Trifluormethansulfonat (CF₃SO₃ Nitrat (NO₃⁻), Hexafluoroarsenat (AsF₆⁻), Tetrakis(pentafluorphenylborat) (B[C₆F₅]₄⁻), Tetrakis[3.5-bis(trifluormethyl)phenyl]borat (B[C₆H₃(CF₃)₂]₄⁻), Tetraphenylborat (B[C₆H₅]₄⁻), Hexafluorotitanat (TiF₆²⁻), Hexafluorogermanat (GeF₆²⁻), Hexafluorosilicat (SiF₆²⁻), Hexafluoronickelat (NiF₆²⁻) und/oder Hexafluorozirkonat (ZrF₆²⁻)

10. Verfahren nach mindestens einem der Ansprüche 1 bis 9, **dadurch gekennzeichnet, dass** der Initiator mindestens fünf gleiche oder verschiedene Metallkationen beinhaltet, die durch verbückende Olefinliganden mit mindestens zwei C-C-Doppelbindungen ein kationischen Koordinationspolymer ausbilden.

11. Verfahren nach mindestens einem der Ansprüche 1 bis 10, **dadurch gekennzeichnet, dass** der Initiator ausgewählt wird aus [Ag(Cyclohexen)₁₋₄]SbF₆, [Ag(Cycloocten)₁₋₄]SbF₆, [Ag(trans-2-Octen)₁₋₄]SbF₆, [Ag(Styrol)₁₄]SbF₆, [Ag(5-Norbornen-2-carbonsäure)₁₋₄]SbF₆, {Ag(1,5-Hexadien)₁₋₄]SbF₆}₁₋ₚ, {[Ag(1,7-Octadien)₁₋₅]SbFr₆}₁₋ₚ, {[Ag(1,9-Decadien)₁₋₄]SbF₆}₁₋ₚ, {[Ag(Sorbinsäureethylester)₁₋₄]SbF₆}₁₋ₚ, {(Ag(1,3-Cyclohexadien)₁₋₄]SbF₆}_{1-c}, {[Ag(1,3-Cyclooctadien)₁₋₄]SbF₆}₁₋ₚ, Ag(1,5-Cyclooctadien)₂]SbF₆, {[Ag(Norbornadien)₁₋₄]SbF₆}₁₋ₚ. {[Ag(Dicyclopentadien)₁₋₄]SbF₆}₁₋ₚ, {[Ag(Cycloheptatrien)₁₋₄]SbF₆}₁₋ₚ, {[Cu(1,7-Octadien)₁₋₄]SbF₆}₁₋ₚ, [Cu(1,5-Cyclooctadien)₂]SbF₆, [Ag(Allylglycidylether)_{1-4]}SbF₆, {[Ag(trans,trans,cis-1,5,9-Cyclododecatrien)₁₋₄]SbF₆}₁₋ₚ, {[Ag(trans,trans,trans-1,5,9-Cyclododecatrien)₁₋₄]SbF₆}₁₋ₚ, {[Ag(Cyclooctatetraen)₁₋₄]SbF₆}₁₋ₚ, {[Ag(Squalen)₁₋₄]SbF₆}₁₋ₚ, wobei p = 20000000 ist.

12. Verfahren nach mindestens einem der Ansprüche 1 bis 11, **dadurch gekennzeichnet, dass** der Initiator geeignet ist, die nicht-thermische Härtung eines Epoxidharzes zu initiieren und/oder zu beschleunigen.

13. Faserhaltiges Mittel zur Herstellung eines faserverstärkten Verbundwerkstoffs, enthaltend
a) Fasern, vorzugsweise ausgewählt aus Kohlefasern, Aramidfasern, Glasfasern, Siliciumnitridfasern, Metallfasern, Keramikfasern, Borfasern Polyethylenfasern, Polypropylenfasern, Polyesterfasern und/oder Naturfasern,
b) mindestens ein Epoxidharz,
c) thermoplastische Partikel und
d) mindestens einen Initiator, der einen oder mehrere kationische Metallolefinkomplexe umfasst.

14. Faserhaltiger Verbundwerkstoff, herstellbar durch ein Verfahren nach mindestens einem der Ansprüche 1 bis 12 und/oder durch Härtung eines faserhaltigen Mittels nach Anspruch 13.

## Claims

1. A method for manufacturing a fibre-containing composite material, comprising the steps of:
a) providing fibres,
b) treating the fibres with at least one epoxy resin, wherein the epoxy resin comprises at least one initiator that contains one or more cationic metal-olefin complexes, and
c) curing the fibre-containing agent obtained in step b), in particular by irradiation with X-radiation, gamma rays, electron beams and/or UV rays,
wherein the fibres provided in step a) are treated with thermoplastic particles before and/or after step b) is performed, and/or the epoxy resin comprises thermoplastic particles.

2. The method according to Claim 1, **characterized in that** the fibres are present in the form of a woven fabric, a mat, a knitted fabric and/or a braid.

3. The method according to one or both of Claims 1 and 2, **characterized in that** the fibres are carbon fibres.

4. The method according to at least one of Claims 1 to 3, **characterized in that** the thermoplastic particles have a glass transition temperature, determined by means of dynamic mechanical analysis (DMA), of at least 45°C.

5. The method according to at least one of Claims 1 to 4, **characterized in that** the thermoplastic particles are made of solid rubbers, block copolymers, polysulfones, polyethersulfones, polyether ketones, polybutylene terephthalates, polycarbonates, polyetherimides, polyalkylenes, polyamides, polyesters, polyamide-imides, polyaryl ethers and/or polyarylates.

6. The method according to at least one of Claims 1 to 5, **characterized in that** at least 90% of the thermoplastic particles, based on the total number of thermoplastic particles, have a maximum extension in any spatial direction of less than 100 µm.

7. The method according to at least one of Claims 1 to 6, **characterized in that** the at least one metal in the cationic metal-olefin complex is selected from silver, cobalt, copper, aluminium or titanium.

8. The method according to at least one of Claims 1 to 7, **characterized in that** at least one olefin in the cationic metal-olefin complex is selected from propene, 1-butene, 1-pentene, 1-hexene, 1-octene, 1-decene, isoprene, norbornene, cyclohexene, cyclooctene, cyclodecene, 1,4-cyclohexadiene, 4-vinylcyclohexene, trans-2-octene, styrene, 5-norbornene-2-carboxylic acid, butadiene, 1,5-hexadiene, 1,6-heptadiene, 1,7-octadiene, 1,9-decadiene, sorbic acid ethyl ester, 1,3-cyclohexadiene, 1,3-cyclooctadiene, 1,5-cyclooctadiene, norbornadiene, dicyclopentadiene, cycloheptatriene, trans,trans,trans-1,5,9-cyclododecatriene, trans,trans,cis-1,5,9-cyclododecatriene, cyclooctatetraene, squalene, diallyl carbonate, diallyl ether, diallyldimethylsilane, cyclopentadiene, ethyl vinyl ether, limonene, 1,2-dihydronaphthalene, cinnamic acid ethyl ester, ethyl acrylate, ethyl methacrylate, stilbene, oleic acid methyl ester or linolenic acid methyl ester.

9. The method according to at least one of Claims 1 to 8, **characterized in that** the initiator contains, in addition to one or more cationic metal-olefin complexes, one or more anions that are selected from hexafluoroantimonate (SbF₆-), hexafluorophosphate (PF₆-), boron tetrafluoride (BF₄-), hexafluoroaluminate (AlF₆³⁻), trifluoromethanesulfonate (CF₃SO₃⁻), nitrate (NO₃⁻), hexafluoroarsenate (AsF₆⁻), tetrakis(pentafluorophenylborate) (B[C₆F₅]₄⁻), tetrakis[3.5-bis(trifluoromethyl)phenyl]borate (B[C₆H₃(CF₃)₂]₄⁻), tetraphenylborate (B[C₆H₅]₄⁻), hexafluorotitanate (TiF₆²⁻), hexafluorogermanate (GeF₆²⁻), hexafluorosilicate (SiF₆²⁻) hexafluoronickelate (NiF₆²⁻) and/or hexafluorozirconate (ZrF₆²⁻).

10. The method according to at least one of Claims 1 to 9, **characterized in that** the initiator contains at least five identical or different metal cations that, by way of bridging olefin ligands having at least two carbon-carbon double bonds, form a cationic coordination polymer.

11. The method according to at least one of Claims 1 to 10, **characterized in that** the initiator is selected from [Ag(cyclohexene)₁₋₄]SbF₆, [Ag(cyclooctene)₁₋₄]SbF₆, [Ag(trans-2-octene)₁₄]SbF₆, [Ag(styrene)₁₋₄]SbF₆, [Ag(5-norbornene-2-carboxylic acid)₁₄]SbF₆, {[Ag(1,5-hexadiene)₁₋₄]SbF₆}₁₋ₚ, {[Ag(1,7-octadiene)_{1.5}]SbF₆}₁₋ₚ, {[Ag(1,9-decadiene)₁₋₄]SbF₆}₁₋ₚ, {[Ag(sorbic acid ethyl ester)₁₋₄]SbF₆}₁₋ₚ, ([Ag(1,3-cyclohexadiene)₁₋₄]SbF₆)₁₋ₚ, {[Ag(1,3-cyclooctadiene)₁₋₄]SbF₆}₁₋ₚ, Ag(1,5-cyclooctadiene)₂]SbF₆, {[Ag(norbornadiene)₁₋₄]SbF₆}₁₋ₚ, {[Ag(dicyclopentadiene)₁₋₄]SbF₆)₁₋ₚ, {[Ag(cycloheptatriene)₁₋₄]SbF₆}₁₋ₚ, {[Cu(1,7-octadiene)₁₋₄]SbF₆}₁₋ₚ, [Cu(1,5-cyclooctadiene)₂]SbF₆, [Ag(allyl glycidyl ether)₁₋₄]SbF₆, {[Ag(trans,trans,cis-1,5,9-cyclododecatriene)₁₄]SbF₆}₁₋ₚ, {[Ag(trans,trans,trans-1,5,9-cyclododecatriene)₁₋₄]SbF₆}₁₋ₚ, {[Ag(cyclooctatetraene)₁₋₄]SbF₆}₁₋ₚ, {[Ag(squalene)₁₋₄]SbF₆}₁₋ₚ, wherein p = 20,000,000.

12. The method according to at least one of Claims 1 to 11, **characterized in that** the initiator is suitable for initiating and/or accelerating non-thermal hardening of an epoxy resin.

13. A fibre-containing agent for manufacturing a fibre-reinforced composite material, containing
a) fibres, preferably selected from carbon fibres, aramid fibres, glass fibres, silicon nitride fibres, metal fibres, ceramic fibres, boron fibres, polyethylene fibres, polypropylene fibres, polyester fibres and/or natural fibres,
b) at least one epoxy resin,
c) thermoplastic particles, and
d) at least one initiator that comprises one or more cationic metal-olefin complexes.

14. A fibre-containing composite material manufacturable by way of a method according to at least one of Claims 1 to 12 and/or by hardening a fibre-containing agent according to Claim 13.

## Revendications

1. Procédé pour la production d'un matériau composite contenant des fibres comprenant les étapes dans lesquelles :
a) on procure des fibres ;
b) on traite les fibres avec au moins une résine époxyde, la résine époxyde comprenant au moins un initiateur qui renferme un ou plusieurs complexes cationiques de métallo-oléfines ; et
c) on durcit l'agent contenant des fibres que l'on obtient à l'étape b), en particulier par exposition à un rayonnement avec des rayons X, des rayons gamma, des rayons électroniques et/ou des rayons UV ;
dans lequel, les fibres que l'on procure à l'étape a) sont traitées, avant et/ou après la mise en oeuvre de l'étape b), avec des particules thermoplastiques et/ou la résine époxyde contient des particules thermoplastiques.

2. Procédé selon la revendication 1, **caractérisé en ce que** les fibres sont présentes sous la forme d'un tissu, d'un mat, d'un tricot et/ou d'un treillis.

3. Procédé selon l'une quelconque des revendications 1 et 2 ou les deux, **caractérisé en ce que** les fibres sont des fibres de carbone.

4. Procédé selon au moins une des revendications 1 à 3, **caractérisé en ce que** les particules thermoplastiques présentent une température de transition vitreuse d'au moins 45 °C, déterminée au moyen d'une AMD (analyse mécanique dynamique).

5. Procédé selon au moins une des revendications 1 à 4, **caractérisé en ce que** les particules thermoplastiques sont constituées par des caoutchoucs solides, des copolymères séquencés, des polysulfones, des polyéthersulfones, des polyéthercétones, des polybutylènetéréphtalates, des polycarbonates, des polyétherimides, des polyalkylènes, des polyamides, des polyesters, des polyamide-imides, des éthers polyaryliques et/ou des polyarylates.

6. Procédé selon au moins une des revendications 1 à 5, **caractérisé en ce qu'**au moins 90 % des particules thermoplastiques, rapportés au nombre total des particules thermoplastiques, présentent un allongement maximal dans chaque direction dans l'espace, inférieur à 100 µm.

7. Procédé selon au moins une des revendications 1 à 6, **caractérisé en ce qu'**au moins un métal dans le complexe cationique de métallo-oléfine est choisi parmi l'argent, le cobalt, le cuivre, l'aluminium ou le titane.

8. Procédé selon au moins une des revendications 1 à 7, **caractérisé en ce qu'**au moins une oléfine dans le complexe cationique de métallo-oléfine est choisie parmi le propène, le 1-butène, le 1-pentène, le 1-hexène, le 1-octène, le 1-décène, l'isoprène, le norbornène, le cyclohexène, le cyclooctène, le cyclodécène, le 1,4-cyclohexadiène, le 4-vinylcyclohexène, le trans-2-octène, le styrène, l'acide 5-norbornène-2-carboxylique, le butadiène, le 1,5-hexadiène, le 1,6-heptadiène, le 1,7-octadiène, le 1,9-décadiène, l'ester éthylique de l'acide sorbique, le 1,3-cyclohexadiène, le 1,3-cyclooctadiène, le 1,5-cyclooctadiène, le norbornadiène, le dicyclopentadiène, le cycloheptatriène, le trans,trans,trans-1,5,9-cyclododécatriène, le trans,trans,cis-1,5,9-cyclododécatriène, le cyclooctatétraène, le squalène, le carbonate de diallyle, l'éther diallylique, le diallyldiméthylsilane, le cyclopentadiène, l'éther éthylvinylique, le limonène, le 1,2-dihydronaphtalène, l'ester éthylique de l'acide cinnamique, l'acrylate d'éthyle, le méthacrylate d'éthyle, le stilbène, l'ester méthylique de l'acide oléique ou l'ester méthylique de l'acide linoléique.

9. Procédé selon au moins une des revendications 1 à 8, **caractérisé en ce que** l'initiateur contient, à côté d'un ou de plusieurs complexes cationiques de métallo-oléfines un ou plusieurs anions qui sont choisis parmi l'hexafluoroantimoniate (SbF₆⁻), l'hexafluorophosphate (PF₆⁻), le tétrafluorure de bore (BF₄⁻), l'hexafluoroaluminate (AlF₆³⁻), le trifluorométhanesulfonate (CF₃SO₃⁻), le nitrate (NO₃⁻), l'hexafluoroarséniate (AsF₆⁻), le tétrakis(pentafluorophénylborate) (B[C₆F₅]₄⁻), le tétrakis[3,5-bis(trifluorométhyl)phényl]borate (B[C₆H₃(CF₃)₂]₄⁻), le tétraphénylborate (B[C₆H₅]₄⁻), l'hexafluorotitanate (TiFs²⁻), l'hexafluorogermaniate (GeF₆²⁻), l'hexafluorosilicate (SiF₆²⁻), l'hexafluoronickelate (NiF₆²⁻) et/ou l'hexafluorozirconate (ZrF₆²⁻).

10. Procédé selon au moins une des revendications 1 à 9, **caractérisé en ce que** l'initiateur contient au moins cinq cations métalliques identiques ou différents qui forment via des ligands oléfiniques formant pont avec au moins deux liaisons doubles C-C un polymère de coordination cationique.

11. Procédé selon au moins une des revendications 1 à 10, **caractérisé en ce que** l'initiateur est choisi parmi :
le [Ag(cyclohexène)1-4]SbF₆, le [Ag(cyclooctène)₁₋₄]SbF₆,
le [Ag(trans-2-octène)₁₋₄]SbF₆, le [Ag(styrène)₁₋₄]SbF₆,
le [Ag(acide 5-norbornène-2-carboxylique)₁₋₄]SbF₆,
le {Ag(1,5-hexadiène)₁₋₄]SbF₆}₁₋ₚ, le {[Ag(1,7-octadiène)_{1,5}]SbF₆}₁₋ₚ,
le {[Ag(1,9-decadiène)₁₋₄]SbF₆}₁₋ₚ,
le {[Ag(ester éthylique de l'acide sorbique)₁₋₄]SbF₆}₁₋ₚ,
le {[Ag(1,3-cyclohexadiène)₁₋₄]SbF₆}₁₋ₚ,
le {[Ag(1,3-cyclooctadiène)₁₋₄]SbF₆}₁₋ₚ,
le Ag(1,5-cyclooctadiène)₂]SbF₆, le {[Ag(norbornadiène)₁₋₄]SbF₆}₁₋ₚ,
le {[Ag(dicyclopentadiène)_{1-4]}SbF₆}₁₋ₚ,
le {[Ag(cycloheptatriène)₁₋₄]SbF₆}₁₋ₚ,
le {[Cu(1,7-octadiène)₁₋₄]SbF₆}₁₋ₚ, le [Cu(1,5-cyclooctadiène)₂]SbF₆,
le [Ag(éther allylglycidylique)₁₋₄]SbF₆}₁₋ₚ,
le {[Ag(trans,trans,cis-1,5,9-cyclododecatriène)₁₋₄]SbF₆}₁₋ₚ,
le {[Ag(trans,trans,trans-1,5,9-cyclododecatriène)₁₋₄]SbF₆)₁₋ₚ,
le {[Ag(cyclooctatétraène)_{1-4]}SbF₆}₁₋ₚ, le {[Ag(squalène)₁₋₄]SbF₆}₁₋ₚ,
dans lesquels p = 20000000.

12. Procédé selon au moins une des revendications 1 à 11, **caractérisé en ce que** l'initiateur est approprié pour déclencher et/ou pour accélérer le durcissement non thermique d'une résine époxyde.

13. Agent contenant des fibres pour la production d'un matériau composite renforcé par des fibres, contenant :
a) des fibres choisies de préférence parmi des fibres de carbone, des fibres d'aramide, des fibres de verre, des fibres de nitrure de silicium, des fibres métalliques, des fibres de céramique, des fibres de bore, des fibres de polyéthylène, des fibres de polypropylène, des fibres de polyester et/ou des fibres naturelles,
b) au moins une résine époxyde ;
c) des particules thermoplastiques ; et
d) au moins un initiateur qui comprend un ou plusieurs complexes cationiques de métallo-oléfines.

14. Matériau composite contenant des fibres, que l'on peut obtenir via un procédé selon au moins une des revendications 1 à 12 et/ou par durcissement d'un agent contenant des fibres selon la revendication 13.
